# EUROPEAN PATENT APPLICATION

(11) **EP 4 844 646 A1**
(43) Date of publication of application: **25.11.2026**
(21) Application number: 25178025.0
(22) Date of filing: 21.05.2025
(51) Int. Cl.: G06Q 10/06, G05B 19/418, B60W 60/00

(54) **DIGITAL TWIN MANAGEMENT OF A WORK CYCLE**

(71) Applicant: Volvo Construction Equipment AB, 631 85 Eskilstuna (SE)
(72) Inventor: JONASSON, Mats, PARTILLE (SE); JOHANSSON, Håkan, BRAÅS (SE); KUMAR, Manoranjan, VÄXJÖ (SE); KVIST, Roland, BRAÅS (SE)
(74) Representative: Ström & Gulliksson AB

(57) **Abstract**

A computer system (100; 600) for digital twin management of a work cycle (22) at a work site (20), comprising processing circuitry (102; 602) configured to: obtain localization data (23) pertaining to the work cycle (22); based on the localization data (23), control a machine (10-1) to travel a first iteration of the work cycle (22); while travelling along said work cycle (22): partition the work cycle (22) into a plurality of cycle segments (24), obtain road surface parameters (32) for each cycle segment (24), and obtain motion estimation data (34) of the machine (10-1) while located at each cycle segment (24); and generate a digital twin (30) of the work cycle (22), the digital twin (30) comprising a plurality of virtual cycle segments (31) corresponding to the cycle segments (24).

## Description

### TECHNICAL FIELD

The disclosure relates generally to material handling machines. **In** particular aspects, the disclosure relates to digital twin management of a work cycle. The disclosure can be applied to material handling machines, such as dump trucks, haulers, loaders, graders, and backhoes, among other vehicle types. Although the disclosure may be described with respect to a particular vehicle, the disclosure is not restricted to any particular vehicle.

### BACKGROUND

In modern industrial operations, the control and management of a fleet of material handling machines, such as automated dump trucks, are used for ensuring efficiency and safety. These machines operate within a structured work cycle, repeatedly traversing a predetermined route. Effective management of these machines involves improving their movement, adapting to varying environmental conditions, and ensuring low downtime.

A digital twin of the work cycle is a dynamic virtual model that mirrors the physical work cycle, incorporating real-time data to reflect its current state and predict future behaviors. It is desirable to manage the digital twin because it enables monitoring, analysis, and optimization without disrupting actual operations. It may allow for simulations and predictions to be made, leading to proactive adjustments that can improve efficiency, safety, and overall performance.

The present inventors are herein presenting improvements relating to digital twin management of a work cycle for material handling machines.

### SUMMARY

Existing digital twin solutions in these contexts often rely on broad, generalized data sets that do not account for the specific nuances of cycle segments within the work cycle. These solutions typically gather data on overall path conditions and average machine performance, neglecting the localized variations in road surface parameters and the corresponding machine responses. Consequently, the control strategies derived from these generalized models may not be optimally suited for specific sections of the work site, leading to inefficiencies and potential safety risks.

In a first aspect of the disclosure there is accordingly provided a computer system for digital twin management of a work cycle at a work site, the computer system comprising processing circuitry configured to: obtain localization data pertaining to the work cycle; based on the localization data, control a first material handling machine to travel a first iteration of the work cycle; while travelling along said work cycle: partition the work cycle into a plurality of cycle segments via which the first material handling machine travels, obtain road surface parameters for each cycle segment, and obtain motion estimation data of the first material handling machine while located at each cycle segment; and generate a digital twin of the work cycle, the digital twin comprising a plurality of virtual cycle segments corresponding to the cycle segments, wherein each virtual cycle segment is associated with a respective set of the obtained road surface parameters and the obtained motion estimation data.

The first aspect of the disclosure may seek to solve a problem of maintaining fleet efficiency and safety amidst varying road conditions at a more granular level. A technical benefit may include improved control at specific segments of a work site.

Optionally in some examples, including in at least one preferred example, the processing circuitry is further configured to: based on the localization data, control one or more additional material handling machines to travel one or more additional iterations of the work cycle; while travelling along said work cycle: obtain road surface parameters for each cycle segment, and obtain motion estimation data of said one or more additional material handling machines for each cycle segment; and update the virtual cycle segments of the digital twin based on the obtained road surface parameters and the obtained motion estimation data. A technical benefit may include enhanced digital twin accuracy through the incorporation of data from multiple machines.

Optionally in some examples, including in at least one preferred example, the processing circuitry is further configured to: determine a target driving criteria for one or more of the virtual cycle segments; and transmit control signals for control of one or more additional material handling machines in one or more additional iterations of the work cycle based on the target driving criteria. A technical benefit may include improved machine performance through targeted control strategies.

Optionally in some examples, including in at least one preferred example, the target driving criteria comprises one or more of a productivity criteria, a fuel consumption criteria, a carbon footprint criteria, and an operational safety criteria. A technical benefit may include the ability to tailor the operation to specific priorities.

Optionally in some examples, including in at least one preferred example, the processing circuitry is configured to determine the target driving criteria by: determining a first operational setting for an additional material handling machine in a first iteration of the work cycle; in response to the additional material handling machine having travelled said first iteration, determining a slippage condition of at least one tire of the additional material handling machine at one or more cycle segments of the work cycle; and based on the slippage condition, determining a second operational setting for the additional material handling machine in one or more additional iterations of the work cycle. A technical benefit may include improved machine control and safety through real-time adjustments based on detected slippage.

Optionally in some examples, including in at least one preferred example, the processing circuitry is configured to determine the slippage condition by: controlling the additional material handling machine to drive both its steering axles while allowing a first axle to freewheel; and applying a negative torque to the first axle to identify a point at which slippage occurs. A technical benefit may include more precise slippage detection by actively probing traction limits.

Optionally in some examples, including in at least one preferred example, the operational setting comprises one or more of: a speed setting for one or more cycle segments; an acceleration setting for one or more cycle segments; a travelling maneuver setting comprising one or more of an indicator to travel to location outside the work cycle, and an indicator to reverse a travelling direction in the work cycle; a friction value setting for the additional material handling machine, the friction value setting comprising one or more of a suspension setting adjustment, and a torque distribution adjustment; and a work cycle adjustment setting, the work cycle adjustment setting comprising one or more of an omission of a cycle segment from the work cycle, an inclusion of a cycle segment to the work cycle, and an adjustment of an existing cycle segment of the work cycle. A technical benefit may include enhanced flexibility in adapting the machine's operation to varying conditions.

Optionally in some examples, including in at least one preferred example, the processing circuitry is further configured to obtain topography data of the work cycle, and wherein the operational setting is adapted based on said topography data. A technical benefit may include enhanced operation by taking into account the specific elevation and terrain of the work cycle.

In a second aspect of the disclosure there is provided a material handling machine comprising the computer system of the first aspect.

The second aspect of the disclosure may seek to solve a problem of maintaining fleet efficiency and safety amidst varying road conditions at a more granular level. A technical benefit may include improved control at specific segments of the work site.

Optionally in some examples, including in at least one preferred example, the material handling machine further comprises a set of sensors being configured to obtain the road surface parameters, the set of sensors comprising: a tire monitoring system module for each tire of the material handling machine; a radar speed sensor; and a 6-axis inertial measurement unit. A technical benefit may include a high degree of data capture to enhance the digital twin.

Optionally in some examples, including in at least one preferred example, the material handling machine further comprises a machine motion estimation system being configured to obtain motion estimation data. A technical benefit may include enhanced capture of motion data that can be used to create a digital twin.

In a third aspect of the disclosure there is provided a fleet comprising a plurality of material handling machines according to the second aspect.

The third aspect of the disclosure may seek to solve a problem of maintaining fleet efficiency and safety amidst varying road conditions at a more granular level. A technical benefit may include improved control at specific segments of the work site.

In a fourth aspect of the disclosure there is provided a computer-implemented method for digital twin management of a work cycle at a work site, the method comprising, by processing circuitry of a computer system: obtaining localization data pertaining to the work cycle; based on the localization data, controlling a first material handling machine to travel a first iteration of the work cycle; while travelling along said work cycle: partitioning the work cycle into a plurality of cycle segments via which the first material handling machine travels, obtaining road surface parameters for each cycle segment, and obtaining motion estimation data of the first material handling machine while located at each cycle segment; and generating a digital twin of the work cycle, the digital twin comprising a plurality of virtual cycle segments corresponding to the cycle segments, wherein each virtual cycle segment is associated with a respective set of the obtained road surface parameters and the obtained motion estimation data.

The fourth aspect of the disclosure may seek to solve a problem of maintaining fleet efficiency and safety amidst varying road conditions at a more granular level. A technical benefit may include improved control at specific segments of the work site.

In a fifth aspect of the disclosure there is provided a computer program product comprising program code for performing, when executed by the processing circuitry, the method of the fourth aspect.

The fifth aspect of the disclosure may seek to enable new material handling machines and/or legacy material handling machines to be conveniently configured, by software installation/update, to maintain fleet efficiency and safety amidst varying road conditions at a more granular level. A technical benefit may include enabling new material handling machines and/or legacy material handling machines to be conveniently configured, by software installation/update, to improve control at specific segments of the work site.

In a sixth aspect of the disclosure there is provided a non-transitory computer-readable storage medium comprising instructions, which when executed by the processing circuitry, cause the processing circuitry to perform the method of the fourth aspect.

The sixth aspect of the disclosure may seek to enable new material handling machines and/or legacy material handling machines to be conveniently configured, by software installation/update, to maintain fleet efficiency and safety amidst varying road conditions at a more granular level. A technical benefit may include enabling new material handling machines and/or legacy material handling machines to be conveniently configured, by software installation/update, to improve control at specific segments of the work site.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary material handling machine according to an example.
**FIG. 2** is an exemplary material handling machine according to another example.
**FIG. 3** is an example site where a fleet of material handling machines operate in a work cycle according to an example.
**FIG. 4** shows exemplary actions carried out by processing circuitry of a computer system for purposes of digital twin management, according to an example.
**FIG. 5** is a flowchart of an exemplary method for digital twin management, according to **an** example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present inventors seek to address the deficiencies of the prior art by partitioning the work cycle into smaller, more manageable cycle segments and obtaining road surface parameters for each cycle segment and motion estimation data of the machine at each cycle segment. A more accurate and responsive digital twin can therefore be generated. This level of detail allows for the development of tailored control strategies that can adapt in real-time to the unique conditions of each segment, offering advantages such as an improved machine performance, safety, and energy management. The ability to fine-tune machine behavior based on segment-specific data, as facilitated by approaches discussed herein, represents an advancement over the broader, less precise methods employed in the prior art.

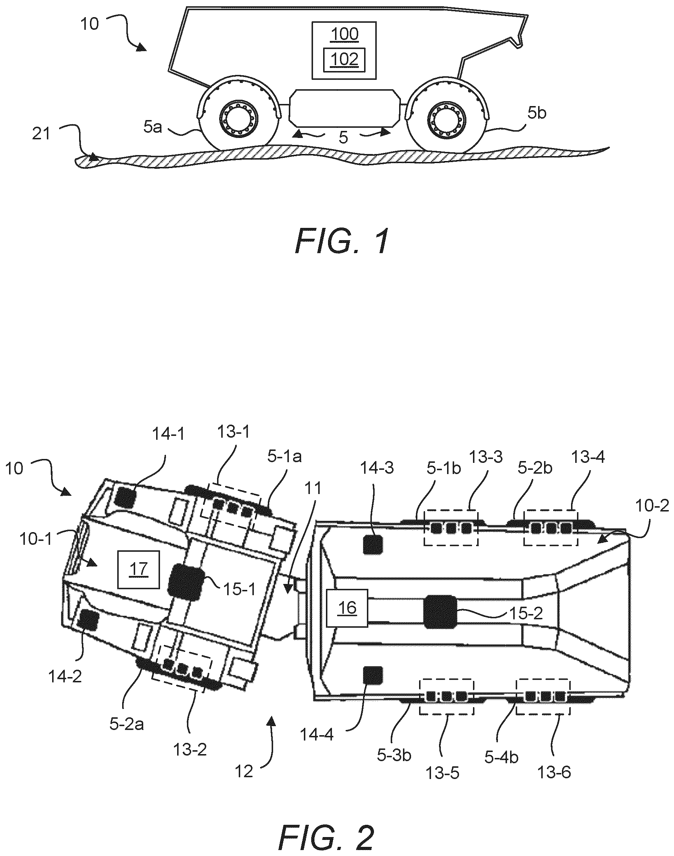

**FIG. 1** is a schematic illustration of an exemplary material handling machine **10** (machine **10** in short) driving on the ground **21.** The machine **10** is a movable construction equipment, such as a dump truck, hauler, loader, grader, backhoe, among other vehicle types. The machine **10** is typically operating autonomously. While not shown in **FIG. 1****,** the machine **10** operates in a fleet involving a plurality of such machines **10.** This allows the machines **10** to be controlled together for performing complementary tasks in order to, for example, reduce operational downtime.

Attached to the machine **10** are tires **5** including pairs **5a** (front pair) and **5b** (rear pair), each connected to their respective axles. These tires **5** interact directly with the ground **21,** providing the necessary traction for movement. Although the tires **5** are designed to handle heavy loads and challenging conditions typical in construction environments, they can experience slippage due to several factors. Uneven terrain, such as loose gravel or soft soil, can reduce the friction between the tires **5** and the ground **21,** leading to a loss of traction. Additionally, environmental conditions like rain or snow can create slippery surfaces, further diminishing grip. Heavy loads carried by the machine **10** also increase the pressure on the tires **5,** potentially increasing slippage on weak or unstable ground. Further, the quality of the tires **5,** such as the depth of tread, can degrade over time with use, leading to diminished traction. The dynamic nature of construction sites, with constant changes in surface conditions, requires the tires **5** to continuously adapt to maintain traction.

The machine **10** comprises a computer system **100** with processing circuitry **102.** The computer system **100** serves as the central control and management unit for the machine **10** for enabling digital twin management. Its purpose is to collect, process, and analyze data related to the operation of the machine **10** and its surrounding environment to create and maintain a digital representation of a work cycle where the machine **10** operates.

The processing circuitry **102** may be arranged in various ways. For example, the processing circuitry **102** could be arranged in one machine **10,** controlling itself and other machines **10** of the fleet. Alternatively, the processing circuitry **102** could be arranged remotely from the machine **10,** where data collected by the machine **10** is transmitted to a remote server or cloud-based system for processing. This can allow for centralized monitoring and control of multiple machines **10,** as well as more complex data analysis and processing capabilities. The processing circuitry **102** could also be arranged in a distributed way amongst several computing units at different locations where certain tasks are performed onboard the machine **10** while others are handled remotely. For example, first processing circuitry **102** of a machine **10** could handle real-time data acquisition and basic control functions, while second processing circuitry **102** remote from the machine **10** (e.g., in another machine **10** of the same fleet **1** or in a server) could perform more complex data analysis and long-term optimization. In addition or as an alternative, a fleet of machines **10** could communicate actions to each other to coordinate the work.

**FIG. 2** shows another example machine **10,** from a top-view schematic perspective, including a tractor **10-1** towing a trailer **10-2.** The machine **10** includes a set of sensors **12** arranged in an exemplary configuration. The machine **10** also includes a machine motion estimation system **16.** The sensors **12** and the machine motion estimation system **16** work in conjunction to obtain a variety of road surface parameters of the travelling surface and motion estimation data of the machine **10.**

The sensors **12** and the machine motion estimation system **16** can communicate with the processing circuitry **102** and form an integral part of the computer system **100** through various communication interfaces. These interfaces can include wired connections, such as Ethernet, CAN bus, or serial communication, as well as wireless connections, such as Wi-Fi, Bluetooth, or cellular communication. The sensors **12** and the machine motion estimation system **16** may transmit raw data to the processing circuitry **102,** which then processes and filters the data to extract relevant road surface parameters and motion estimation data. Alternatively or additionally, the sensors **12** and/or the machine motion estimation system **16** may include processing circuitry configured to perform some steps normally carried out by the processing circuitry **102,** such as processing, filtering, and/or extraction. The level of "smartness" may differ from one type of sensor **12** and/or motion estimation system **16** to another. The processing circuitry **102** and/or the sensors **12** and/or the motion estimation system **16** may also implement sensor fusion algorithms to combine data from multiple sources, improving the accuracy and reliability of the measurements.

The sensors **12** are devices used to detect and measure physical properties of the environment or the machine **10** itself. Road surface parameters are the characteristics of the surface at which the machine **10** travels that influence, for example, the performance and safety of the machine **10.** Examples of road surface parameters comprise roughness, friction, slope, presence of obstacles, material composition, moisture levels, and temperature. The sensors **12** are primarily responsible for directly measuring these road surface parameters.

Motion estimation data, on the other hand, refers to information about the movement and orientation of the machine **10** itself, such as its speed, acceleration, and angular rates. The machine motion estimation system **16** is specifically designed to collect and process data related to the motion of the machine **10,** and may utilize data from the sensors **12,** to estimate such motion. Hence, the machine motion estimation system **16** may, similar to the processing circuitry **102,** be in operative communication with the sensors **12** to retrieve data therefrom. To this end, the machine motion estimation system **16** provides access to data such as true speed, wheel speed, turning, uphill and downhill gradients, machine weight, banking of road, tire wear, and tire pressure.

The sensors **12** include a tire monitoring system module **13** for each tire **5.** The tire monitoring system modules **13** are designed to measure various parameters related to the tires **5,** such as tire pressure, temperature, and tread depth. In this example, each module **13** includes three sub-modules, and there is a tire monitoring system module **13-1** for the front tire **5-1a,** a tire monitoring system module **13-2** for the front tire **5-2a,** a tire monitoring system module **13-3** for the rear tire **5-1b,** a tire monitoring system module **13-4** for the rear tire **5-2b,** a tire monitoring system module **13-5** for the rear tire **5-3b,** and a tire monitoring system module **13-6** for the rear tire **5-4b.** The modules **13** can be integrated into the tire **5** itself, mounted on the wheel hub, or placed within a cavity of the tire **5.** From the tire monitoring system module **13,** parameters such as tire wear and tire pressure can be determined, which contribute to understanding the interaction between the machine **10** and the road surface.

The sensors **12** include a radar speed sensor **14.** The radar speed sensors **14** use radio waves to measure the speed of the machine **10** relative to the ground. In this example, there are two radar speed sensors **14-1, 14-2** for the tractor **10-1** and two radar speed sensors **14-3, 14-4** for the trailer **10-2.** The radar speed sensors **14** can be mounted on the chassis or suspension components of the tractor **10-1** and trailer **10-2** to provide speed measurements for each vehicle segment. The radar speed sensors **14** provide data for determining true speed and wheel speed, used for motion estimation.

The sensors **12** include a 6-axis inertial measurement units (IMUs) **15.** The 6-axis IMUs **15** measure linear acceleration and angular rate along three orthogonal axes. This provides information about orientation and motion of the machine **10.** In this example, there is one 6-axis IMU **15-1** for the tractor **10-1** and one 6-axis IMU **15-2** for the trailer **10-2.** The 6-axis IMUs **15** can be mounted on the frame of the tractor **10-1** and trailer **10-2** to capture the motion dynamics of each vehicle segment. The IMU data contributes to determining parameters such as turning, uphill and downhill gradients, and banking of the road.

Furthermore, the machine **10** may be equipped with an On Board Weighing system (OBW) **17,** providing access to the total machine weight. The OBW **17** includes a set of sensors and electronics integrated into the machine **10** to measure its weight in real-time. The OBW **17** typically includes load cells or strain gauges placed at select locations within the suspension or chassis of the machine **10.** These cells or gauges measure the force exerted by the weight of the machine **10,** converting it into an electrical signal. This signal is then processed by an electronic control unit that calculates the total machine weight and transmits the data to the processing unit **102.** The OBW **17** may also include sensors to measure the distribution of weight across different axles or components of the machine **10** to provide additional information about load balance of the machine **10.** With this data, the processing circuitry **102** has more than a virtual gyroscope and is able to manage principles of dead reckoning. This process may be repeated for every iteration travelled along a work cycle.

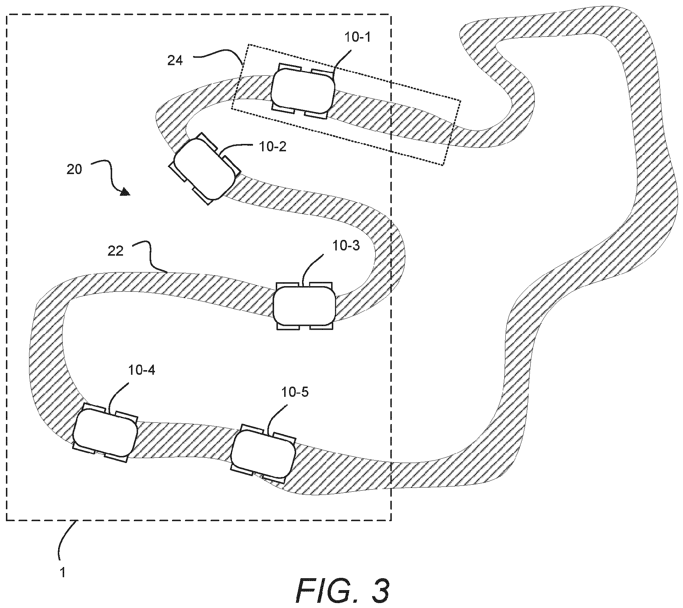

**FIG. 3** shows an exemplary work cycle **22** of a site **20** where a fleet **1** of any suitable number of machines **10,** here five machines **10-1** through **10-5,** operate. The site **20** is typically an outdoor environment characterized by rough terrain, such as a quarry, construction site, or logging area. These sites may feature uneven ground, loose gravel, or mud, posing challenges for maintaining traction.

The work cycle **22** refers to a repetitive sequence of operations that the fleet **1** of machines **10** undertake at the site **20.** The machines **10** travel along the work cycle **22** in iterations. This work cycle **22** encompasses the process from loading materials at a designated location, transporting them along a predetermined route, and unloading them at a specific destination. The work cycle **22** includes a plurality of cycle segments **24** (where the illustration merely depicts one of them, although it shall be understood that any number is suitable), each representing a portion of the work cycle **22.** The cycle segment **24** can vary in length and complexity, depending on the layout and operational requirements of the site **20.** Cycle segments **24** selected along the work cycle **22** directly impacts the efficiency and safety of operations. Its condition can vary due to weather, frequent use, or changes in the terrain, warranting monitoring and adaptation to maintain desirable performance.

For instance, a work cycle **22** at a mining site might involve machines **10** traveling several kilometers from the excavation point to a processing area, navigating inclines and declines along the way. Alternatively, in a construction site within an urban setting, the work cycle **22** could be shorter, involving maneuvering through tighter spaces and around obstacles. The work cycle **22** can change over time as project phases shift or as the location of loading and unloading areas is altered.

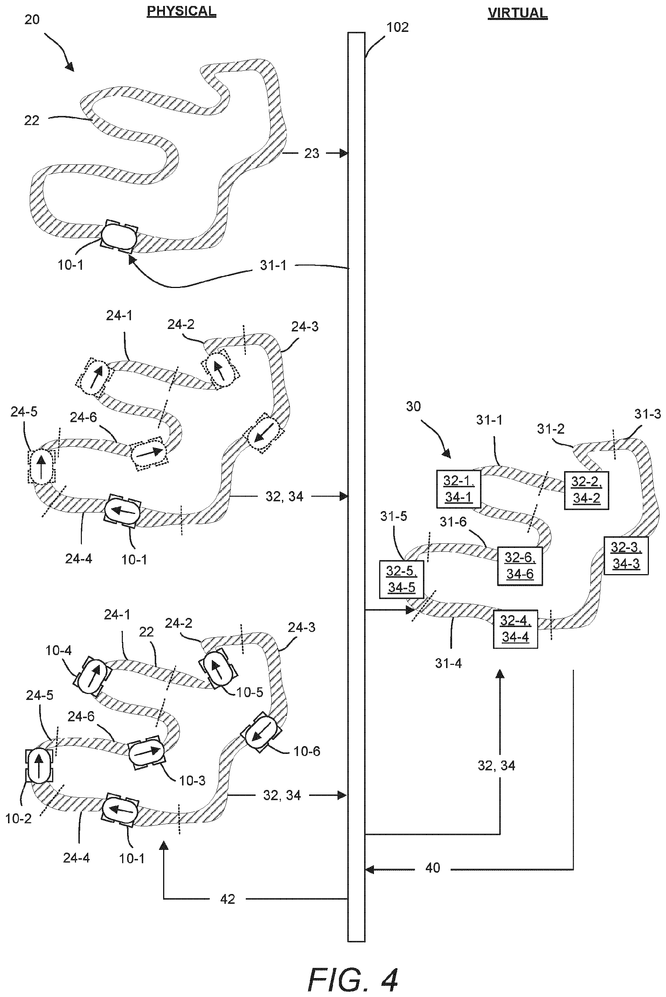

Reference is now made to **FIG. 4****,** showing example actions that the processing circuitry **102** implements for purposes of managing a digital twin **30** of a work cycle **22.** In **FIG. 4****,** the interaction between a physical environment and a virtual environment for digital twin management is shown. The physical environment represents the actual work site **20** with a defined work cycle **22.** The work cycle **22** is the route traversed by machines **10,** here six of them **(10-1** through **10-6).** The virtual environment is a computational representation of the physical environment, comprising data structures and optionally algorithms that model the behavior and characteristics of the work cycle **22.** The virtual environment includes a digital twin **30** of the work cycle **22.** The processing circuitry **102** acts as an interface between the physical and virtual environments.

First, the processing circuitry **102** is configured to obtain localization data **23** pertaining to the work cycle **22.** The localization data **23** comprises the position and spatial arrangement of the work cycle **22** within the physical environment. This data can be collected before a first machine **10-1** travels the work cycle **22** to establish a baseline understanding of the route. In some examples the first machine **10-1** could be instructed to drive an iteration of the work cycle **22** to establish the baseline for obtaining the localization data **23.** Localization data **23** can be obtained through various methods, such as via GNSS, including GPS, GLONASS, Galileo, BeiDou, or other regional navigation systems. Other methods of obtaining localization data **23** may be envisaged via laser scanning, Simultaneous Localization and Mapping (SLAM), or IMUs.

Based on the localization data **23,** the processing circuitry **102** controls a first machine **10-1** to travel a first iteration of the work cycle **22.** This control is achieved by using the localization data **23** as a reference for navigation. It can be done regardless of whether the first machine **10-1** has already driven an iteration of the work cycle **22** or not. The processing circuitry **102** calculates a planned path for the machine **10-1** along the work cycle **22** and generates control signals to guide the machine **10-1.** These control signals may adjust parameters such as speed, steering angle, and acceleration to ensure that the machine **10-1** follows the planned path.

During the travel of the work cycle **22,** a set of actions are carried out for each iteration. The procedure begins with a first iteration of the first machine **10-1.** Hence, in the illustration (the middle map in the physical environment), the first machine **10-1** is controlled to travel a first iteration along the work cycle **22.** Optionally, if the data obtained is deemed insufficient, the first machine **10-1** may travel one or more additional iterations along the work cycle **22** before introducing additional machines **10-2,** ... , **10-6.** More specifically, during the travel, three main steps are carried out: a partitioning of the work cycle **22,** an obtainment of road surface parameters **32,** and an obtainment of motion estimation data **34.**

The first step in managing the digital twin **30** is to partition the work cycle **22** into a plurality of cycle segments **24** via which the machine **10-1** travels. In this particular example, the work cycle **22** involves six cycle segments **24-1** through **24-6,** although any number of segments **24** could potentially be envisaged depending on the complexity and variability of the work site **20.** Partitioning, in a technical sense, refers to the process of dividing the continuous path of the work cycle **22** into discrete, non-overlapping sections. This division is based on identifying distinct changes in the characteristics of the path. An upcoming segment **24-2** is typically characterized by having different properties than a former segment **24-1** to distinguish them. This usually means that they are associated with different road surface parameters **32** and/or that the machine **10-1** behaves differently on the different cycle segments **24** depending on its motion estimation data **34.** Each cycle segment **24** will therefore typically be associated with distinct sets of road surface parameters **32** and distinct sets of motion estimation data **34** for the machine **10-1** at those cycle segments **24.** Partitioning enables the computer system **100** to focus on specific areas of the work cycle **22,** allowing for a more granular control tailored to the unique conditions of each cycle segment **24.**

While travelling along the work cycle **22,** the processing circuitry **102** obtains road surface parameters **32** for each cycle segment **24.** This may be achieved through the use of the various sensors **12** integrated into the machine **10-1.** The sensors **12,** working in conjunction with the machine motion estimation system **16,** may continuously measure and collect data related to the road surface. For example, the tire monitoring system modules **13** provide data on tire pressure and wear, which can indicate the roughness and friction of the road surface. The radar speed sensors **14** measure the speed of the machine **10-1** relative to the ground, providing information about the surface's slope and resistance. The 6-axis IMUs **15** capture the machine's **10-1** orientation and motion, allowing for the calculation of uphill and downhill gradients and the banking of the road. Furthermore, the On Board Weighing system (OBW) **17** provides data on the machine's **10-1** weight, which can influence its interaction with the road surface. The data from these sensors **12** and the OBW **17** may be processed by the machine motion estimation system **16** to derive accurate road surface parameters **32** for each cycle segment **24.** These parameters may then be transmitted to the processing circuitry **102** for subsequent use, as will be discussed soon.

While travelling along the work cycle **22,** the processing unit **102** obtains motion estimation data **34** of the first machine **10-1** while located at each cycle segment **24.** This involves continuously monitoring and recording the machine's **10-1** movement and orientation as it traverses each cycle segment **24** according to the partition. By utilizing data from the sensors **12,** the machine motion estimation system **16** may estimate parameters such as the machine's **10-1** speed, acceleration, angular rates, and orientation. For instance, the radar speed sensors **14** provide accurate measurements of the machine's **10-1** linear velocity, while the 6-axis IMUs **15** capture its rotational motion. The machine motion estimation system **16** processes this data to derive motion estimation data **34** specific to each cycle segment **24.**

This process means that each cycle segment **24** will be associated with various data, including road surface parameters **32** and motion estimation data **34.** The processing circuitry **102** can cause storage of this data in a memory for further use. This segment-specific data storage is advantageous compared to the prior art, where data is typically collected and analyzed on a more global scale. By storing data at the cycle segment level, the processing circuitry **102** can develop tailored control strategies for each segment **24,** aiming to achieve various target driving criteria pertaining to productivity, fuel consumption, carbon footprint, and operational safety. This level of granularity enables the computer system **100** to adapt in real-time to the unique conditions of each cycle segment **24.**

The procedure continues in the virtual environment, where the processing circuitry **102,** leveraging its computational capabilities, synthesizes the data collected from the physical world to form a digital representation. Based on the road surface parameters **32,** which characterize the properties of each cycle segment **24,** and the motion estimation data **34,** which describes the machine's **10-1** behavior within those cycle segments **24,** the processing circuitry **102** generates a digital twin **30.** The digital twin **30** serves as a virtual counterpart to the physical work cycle **22,** enabling for example simulations, predictions, and optimizations without disrupting actual operations. This digital representation is generated to mirror the real-world conditions and dynamics of the work cycle **22.**

The digital twin **30** is generated comprising a plurality of virtual cycle segments **31.** These virtual cycle segments **31** are digital constructs that directly reflect the corresponding cycle segments **24** in the physical world. Each virtual cycle segment **31** is associated with the unique characteristics of its physical counterpart, including the road surface parameters **32** and motion estimation data **34** associated with that specific cycle segment **24.** This means that the virtual environment maintains a high-fidelity representation of the physical work cycle **22,** allowing for simulations and analyses. The digital twin **30** essentially becomes a dynamic, data-driven model that can be used to understand, predict, and improve the performance of the machine **10-1** within the work cycle **22.**

The virtual cycle segments **31** can be represented as objects within a software environment, each containing attributes that define its properties. These attributes may include numerical values for road surface parameters **32** such as friction and roughness, as well as time series data for motion estimation data **34** such as speed and acceleration. The virtual cycle segments **31** can be organized into a graph structure, where the nodes represent the segments and the edges represent the connections between them. This graph structure allows for navigation and analysis of the work cycle **22.** In a graphical user interface, the virtual cycle segments **31** can be displayed as individual elements within a map or chart, allowing users to visualize the characteristics of each segment and compare them to others. The graphical user interface may also provide tools for editing the properties of the virtual cycle segments **31,** enabling users to simulate different scenarios and evaluate the impact of various changes.

In preferred examples, the procedure does not end with a single machine **10-1.** Rather, the procedure may continue according to what is shown in **FIG. 4** to control one or more additional machines, here five machines **10-2** through **10-6.** This involves several steps.

Firstly, based on the localization data **23,** the processing circuitry **102** controls one or more additional machines **10-n** to travel one or more additional iterations of the work cycle **22.** This ensures that multiple machines follow the defined route, allowing for increased efficiency and throughput. While travelling along the work cycle **22,** the processing circuitry **102** obtains road surface parameters **32** for each cycle segment **24,** as well as motion estimation data **34** of said one or more additional material handling machines **10-2,** ... , **10-6** (as well as for the first machine **10-1** travelling additional iterations) for each cycle segment **24.** This data collection process is similar to that performed for the first machine **10-1,** but now applied to multiple machines **10-1,** ... , **10-6.** The virtual cycle segments **31** of the digital twin **30** are then updated based on the obtained road surface parameters **32** and the obtained motion estimation data **34.** This continuous updating process ensures that the digital twin **30** remains accurate and reflects the current conditions of the work cycle **22.** By incorporating data from multiple machines **10-1,** ... , **10-6,** the digital twin **30** becomes more robust and reliable.

The digital twin **30** will accordingly be designed to maintain a consistently updated representation of the work cycle **22,** including a range of parameters. These parameters include coordinates, which define the precise location and geometry of cycle segments **24.** The parameters may also include areas where traction control is needed, e.g., by identifying cycle segments **24** prone to slippage. The parameters may also include steering force, indicating the effort required to maintain the desired path of the cycle segments **24.** The parameters may also include inclination, representing the slope of the cycle segments **24.** The parameters may also include banking, describing the lateral tilt of the cycle segments **24.** The parameters may also include ground texture, characterizing the surface roughness and composition of the cycle segments **24.** The parameters may also include ground softness, indicating the degree of deformation under load of the cycle segments **24.** The parameters may also include load bearing capacity of the ground of the cycle segments **24,** specifying the maximum or target weight the surface can support. The parameters may also include friction between tire and ground of the cycle segments **24,** quantifying the grip available for traction. The parameters may also include temperature of the cycle segments **24,** reflecting the thermal conditions of the surface. By maintaining these parameters, the digital twin **30** provides a holistic view of characteristics of cycle segments **24** of the work cycle **22,** enabling informed decision-making and improved machine control.

In some examples, the processing circuitry **102** may also be configured to correlate the parameters of the digital twin **30** with external data, such as weather forecast, the actual weather, and/or satellite navigation data. The weather forecast provides predictive information about future environmental conditions. The actual weather offers real-time data on current environmental conditions. The satellite navigation data may calibrate IMU data for enhancing localization and orientation prediction precision of the machine **10.** By integrating these external data sources, the processing circuitry **102** can adapt the digital twin **30** to dynamic conditions to obtain proactive adjustments to machine control based on environmental factors.

In some examples, a target driving criteria **40** may be obtained for one or more of the virtual cycle segments **31.** The target driving criteria **40** embody the desired operational outcomes for the machines **10** as they navigate the work cycle **22.** These criteria **40** act as benchmarks for performance, influencing how the machines **10** are controlled and managed. The criteria **40** can comprise one or more of a productivity criteria, a fuel consumption criteria, a carbon footprint criteria, and an operational safety criteria. The processing circuitry **102** leverages the digital twin **30** to assess the current state of each virtual cycle segment **31** for determining desirable control signals **42** needed to align machine behavior with the target driving criteria **40.**

Based on the target driving criteria **40,** control signals **42** may be transmitted for control of one or more of the machines **10-1,** ..., **10-6** in one or more additional iterations of the work cycle **22.** These control signals **42** act as instructions, adjusting parameters such as speed, acceleration, braking, and steering to guide the machines **10** towards the desired performance. The signals **42** may be transmitted wirelessly or via wired connections, depending on the machine's **10** communication capabilities. The specific nature of the control signals **42** will depend on the type of target driving criteria **40** being pursued.

For example, if the target driving criteria **40** comprises a productivity criteria, the goal is to increase the amount of material transported within a given time frame. The processing circuitry **102** may analyze the digital twin **30** to identify virtual cycle segments **31** where the machines **10** are moving slower than necessary, perhaps due to conservative speed limits or perceived road conditions. In this case, the control signals **42** may instruct the machines 10 to increase their speed in these virtual cycle segments **31,** thereby increasing productivity, while ensuring that safety margins are maintained.

In another example, if the target driving criteria **40** comprises a fuel consumption criteria, the objective is to reduce the amount of fuel consumed by the machines **10** during operation. The processing circuitry **102** may identify segments where the machines **10** are experiencing high rolling resistance due to poor road surface conditions, such as loose gravel or uneven terrain. The control signals **42** may then instruct the machines **10** to reduce their speed or adjust their route to navigate around these problematic areas, ultimately reducing fuel consumption.

In another example, if the target driving criteria **40** comprises a carbon footprint criteria, the goal is to reduce the environmental impact of the machines **10** by reducing their greenhouse gas emissions. The processing circuitry **102** may improve the machine's **10** path to reduce emissions by analyzing various factors contributing to the carbon footprint. This analysis may include identifying virtual segments **31** where the machines **10** are operating at high engine loads, which typically lead to increased fuel consumption and emissions. The processing circuitry **102** may then generate control signals **42** to modify the machine's **10** behavior, such as adjusting the engine speed, improving gear selection, or altering the route to avoid steep inclines or areas with poor traction. For instance, the processing circuitry **102** might identify an alternative route that is slightly longer but has a gentler slope, resulting in lower engine load and reduced emissions. Additionally, the processing circuitry **102** could improve the timing of machine operations to reduce idling time or coordinate the movement of multiple machines **10** to reduce congestion and improve overall efficiency. The processing circuitry **102** may also take into account external factors, such as weather conditions, to adjust the machine's **10** path and speed, further reducing emissions.

In another example, if the target driving criteria **40** comprises an operational safety criteria, the goal is to reduce the risk of accidents or incidents during operation. The processing circuitry **102** may identify segments where the road surface is particularly rough or slippery, or where visibility is limited due to weather conditions or obstacles. The control signals **42** may then instruct the machines **10** to reduce their speed, increase their following distance, activate safety systems such as traction control or electronic stability control, or even temporarily halt operation until the hazardous conditions subside, all to enhance operational safety.

The determination of the target driving criteria **40** may be based on an iterative process that involves monitoring and adjusting the operational settings of the machines **10.** This procedure may begin with determining a first operational setting for a selected machine **10** that should meet a certain criteria **40.** This initial setting could involve parameters such as speed limits, acceleration profiles, or gear selection strategies. The initial setting may be based on default values or historical data. In response to the machine **10** having travelled a first iteration, the processing circuitry **102** is configured to determine a slippage condition of at least one tire **5** of the machine **10** at one or more cycle segments **24** of the work cycle **22.**

Slippage occurs when the tire **5** loses traction with the road surface, resulting in a difference between the wheel's rotational speed and the machine's **10** actual speed. The processing circuitry **102** may be configured to carry out a deliberate slippage condition determination by employing a specific method that involves manipulating the steering and torque of the machine **10.** This method allows the processing circuitry **102** to actively probe the limits of traction and identify the onset of slippage. To do this, the processing circuitry **102** may control the machine **10** to drive both its steering axles while allowing a first axle to freewheel. This means that power is applied to both steering axles to propel the machine **10** forward, while the first axle is allowed to rotate freely without any driving force. This creates a controlled imbalance in the distribution of power to the wheels.

Next, the processing circuitry **102** applies a negative torque to the first axle to identify a point at which slippage occurs. Negative torque refers to a force that opposes the rotation of the axle, effectively acting as a brake. By gradually increasing the negative torque applied to the freewheeling axle, the processing circuitry **102** can determine the point at which the tire **5** on that axle begins to slip. This slippage is detected by monitoring the wheel speed and comparing it to the machine's **10** overall speed. When the wheel speed deviates above a threshold limit from the machine's **10** speed, it may indicate that slippage has occurred.

Based on the slippage condition, a second operational setting is determined for the machine **10** in one or more additional iterations of the work cycle **22.** This adjustment aims to mitigate the slippage and improve the machine's **10** performance and safety. For example, if slippage is detected in a particular cycle segment **24,** the second operational setting may involve reducing the machine's **10** speed, increasing the traction control, or adjusting the steering angle. The processing circuitry **102** may calculate the appropriate adjustments based on the severity and frequency of the slippage, as well as the characteristics of the cycle segment **24.** The adjusted operational settings are then implemented in subsequent iterations of the work cycle **22.** This iterative process allows the processing circuitry **102** to continuously refine the machine's **10** operational settings and improve its performance in real-time.

The operational setting may comprise a speed setting for one or more cycle segments **24.** The speed setting defines the maximum or target speed at which the machine **10** should travel along a particular cycle segment **24.** This setting can be adjusted to improve productivity, fuel efficiency, or safety. For example, if a cycle segment **24** has a steep incline or a rough surface, the speed setting may be reduced to prevent excessive engine load or loss of traction. Conversely, if a cycle segment **24** is smooth and level, the speed setting may be increased to increase productivity. The speed setting can be expressed in units such as kilometers per hour (km/h).

The operational setting may comprise an acceleration setting for one or more cycle segments **24.** The acceleration setting defines the rate at which the machine **10** should increase its speed along a particular cycle segment **24.** This setting can be adjusted to improve fuel efficiency, reduce emissions, or prevent excessive wear and tear on the machine **10.** For example, a gradual acceleration setting may be used to reduce fuel consumption and emissions, while a more aggressive acceleration setting may be used to quickly reach the desired speed in a time-sensitive operation. The acceleration setting can be expressed in units such as meters per second squared (m/s²).

The operational setting may comprise a travelling maneuver setting, which is a broader instruction that dictates the machine's **10** overall path or behavior within the work site **20.** The travelling maneuver setting may comprise one or more of an indicator to travel to a location outside the work cycle **22** and an indicator to reverse a travelling direction in the work cycle **22.** For example, the indicator to travel to a location outside the work cycle **22** may be used to direct the machine **10** to a maintenance depot or a refueling station. The indicator to reverse a travelling direction in the work cycle **22** may be used to navigate around an obstacle or to correct a deviation from the planned route. These settings provide flexibility in managing the machine's **10** movements and responding to unexpected events.

The operational setting may comprise a friction value setting for the additional material handling machine **10.** The friction value setting comprises one or more of a suspension setting adjustment and a torque distribution adjustment. This setting aims to improve the machine's **10** traction and stability by adjusting parameters that affect the friction between the tires **5** and the road surface. A suspension setting adjustment may involve adjusting the stiffness or damping of the suspension system to improve the tire's **5** contact with the road surface. For example, increasing the suspension stiffness may improve traction on a smooth surface, while reducing the suspension stiffness may improve traction on a rough surface. A torque distribution adjustment may involve adjusting the amount of torque applied to each axle or wheel to prevent slippage. For example, if slippage is detected on one axle, the torque distribution may be adjusted to reduce the torque applied to that axle and increase the torque applied to other axles.

The operational setting may comprise a work cycle adjustment setting, which allows for modifications to the work cycle **22** itself. The work cycle adjustment setting comprises one or more of an omission of a cycle segment **24** from the work cycle **22,** an inclusion of a cycle segment **24** to the work cycle **22,** and an adjustment of an existing cycle segment **24** of the work cycle **22.** An omission of a cycle segment **24** from the work cycle **22** may be used to bypass a section of the route that is temporarily blocked or hazardous. An inclusion of a cycle segment **24** to the work cycle **22** may be used to add a new drop-off point or to detour around the work site **20.** An adjustment of an existing cycle segment **24** of the work cycle **22** may involve changing the route's length, curvature, or elevation to improve traffic flow or improve safety.

The processing circuitry **102** may be further configured to obtain topography data of the work cycle **22,** and the operational setting may then be adapted based on said topography data. Topography data refers to information about the elevation and terrain of the work cycle **22.** This data can be obtained using various methods, such as those described above in relation to the obtainment of the localization data **23.** By incorporating topography data into the decision-making process, the processing circuitry **102** can further improve the operational settings of the machines **10.** For example, if a cycle segment **24** has a steep incline, the speed setting may be reduced, and the torque distribution may be adjusted to prevent slippage. Similarly, if a cycle segment **24** has a sharp curve, the steering angle may be adjusted to maintain stability.

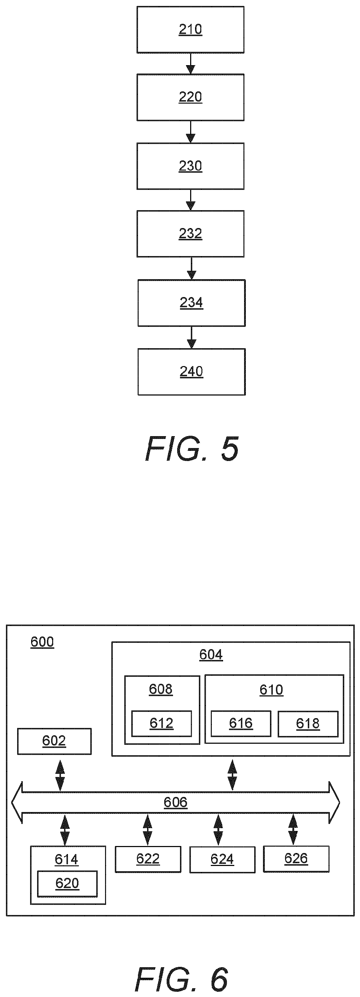

**FIG. 5** is a flowchart of a computer-implemented method **200** for digital twin management of a work cycle **22** at a work site **20.** The steps of the method **200** are carried out by processing circuitry **102** of a computer system **100.** The method **200** comprises a step of obtaining **210** localization data **23** pertaining to the work cycle **22.** The method **200** further comprises a step of, based on the localization data **23,** controlling **220** a first machine **10-1** to travel a first iteration of the work cycle **22.** The method **200** further comprises the steps of, while travelling along said work cycle **22:** partitioning **230** the work cycle **22** into a plurality of cycle segments **24** via which the first machine **10-1** travels, obtaining **232** road surface parameters **32** for each cycle segment **24,** and obtaining **234** motion estimation data **34** of the first machine **10-1** while located at each cycle segment **24.** The method **200** further comprises a step of generating **240** a digital twin **30** of the work cycle **22,** the digital twin **30** comprising a plurality of virtual cycle segments **31** corresponding to the cycle segments **24,** wherein each virtual cycle segment **31** is associated with a respective set of the obtained road surface parameters **32** and the obtained motion estimation data **34.**

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In further examples of the disclosure one or more of the following can be envisaged.

Example 1: A computer system (100; 600) for digital twin management of a work cycle (22) at a work site (20), the computer system (100; 600) comprising processing circuitry (102; 602) configured to: obtain localization data (23) pertaining to the work cycle (22); based on the localization data (23), control a first material handling machine (10-1) to travel a first iteration of the work cycle (22); while travelling along said work cycle (22): partition the work cycle (22) into a plurality of cycle segments (24) via which the first material handling machine (10-1) travels, obtain road surface parameters (32) for each cycle segment (24), and obtain motion estimation data (34) of the first material handling machine (10-1) while located at each cycle segment (24); and generate a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34).

Example 2: The computer system (100; 600) of example 1, wherein the processing circuitry (102; 602) is further configured to: based on the localization data (23), control one or more additional material handling machines (10-n) to travel one or more additional iterations of the work cycle (22); while travelling along said work cycle (22): obtain road surface parameters (32) for each cycle segment (24), and obtain motion estimation data (34) of said one or more additional material handling machines (10-n) for each cycle segment (24); and update the virtual cycle segments (31) of the digital twin (30) based on the obtained road surface parameters (32) and the obtained motion estimation data (34).

Example 3: The computer system (100; 600) of example 2, wherein the processing circuitry (102; 602) is further configured to: determine a target driving criteria (40) for one or more of the virtual cycle segments (31); and transmit control signals (42) for control of one or more additional material handling machines (10-n) in one or more additional iterations of the work cycle (22) based on the target driving criteria (40).

Example 4: The computer system (100; 600) of example 3, wherein the target driving criteria (40) comprises a productivity criteria.

Example 5: The computer system (100; 600) of any of examples 3-4, wherein the target driving criteria (40) comprises a fuel consumption criteria.

Example 6: The computer system (100; 600) of any of examples 3-5, wherein the target driving criteria (40) comprises a carbon footprint criteria.

Example 7: The computer system (100; 600) of any of examples 3-6, wherein the target driving criteria (40) comprises an operational safety criteria.

Example 8: The computer system (100; 600) of any of examples 3-7, wherein the processing circuitry (102; 602) is configured to determine the target driving criteria (40) by: determining a first operational setting for an additional material handling machine (10-n) in a first iteration of the work cycle (22); in response to the additional material handling machine (10-n) having travelled said first iteration, determining a slippage condition of at least one tire (5) of the additional material handling machine (10-n) at one or more cycle segments (24) of the work cycle (22); and based on the slippage condition, determining a second operational setting for the additional material handling machine (10-n) in one or more additional iterations of the work cycle (22).

Example 9: The computer system (100; 600) of example 8, wherein the processing circuitry (102; 602) is configured to determine the slippage condition by: controlling the additional material handling machine (10-n) to drive both its steering axles while allowing a first axle to freewheel; and applying a negative torque to the first axle to identify a point at which slippage occurs.

Example 10: The computer system (100; 600) of any of examples 8-9, wherein the operational setting comprises a speed setting for one or more cycle segments (24).

Example 11: The computer system (100; 600) of any of examples 8-10, wherein the operational setting comprises an acceleration setting for one or more cycle segments (24).

Example 12: The computer system (100; 600) of any of examples 8-11, wherein the operational setting comprises a travelling maneuver setting, the travelling maneuver setting comprising one or more of: an indicator to travel to location outside the work cycle (22), and an indicator to reverse a travelling direction in the work cycle (22).

Example 13: The computer system (100; 600) of any of examples 8-12, wherein the operational setting comprises a friction value setting for the additional material handling machine (10-n), the friction value setting comprising one or more of: a suspension setting adjustment, and a torque distribution adjustment.

Example 14: The computer system (100; 600) of any of examples 8-13, wherein the operational setting comprises a work cycle adjustment setting, the work cycle adjustment setting comprising one or more of: an omission of a cycle segment (24) from the work cycle (22), an inclusion of a cycle segment (24) to the work cycle (22), and an adjustment of an existing cycle segment (24) of the work cycle (22).

Example 15: The computer system (100; 600) of any of examples 8-14, wherein the processing circuitry (102; 602) is further configured to obtain topography data of the work cycle (22), and wherein the operational setting is adapted based on said topography data.

Example 16: A material handling machine (10) comprising the computer system (100; 600) of any of examples 1-15.

Example 17: The material handling machine (10) of example 16, further comprising a set of sensors (12) being configured to obtain the road surface parameters (32), the set of sensors (12) comprising: a tire monitoring system module (13) for each tire (5) of the material handling machine (10); a radar speed sensor (14); and a 6-axis inertial measurement unit (15).

Example 18: The material handling machine (10) of example 16 or 17, further comprising a machine motion estimation system (16) being configured to obtain motion estimation data (34).

Example 19: A fleet (1) comprising a plurality of material handling machines (10) according to any of examples 16-18.

Example 20: A computer-implemented method (200) for digital twin management of a work cycle (22) at a work site (20), the method (200) comprising, by processing circuitry (102; 602) of a computer system (100; 600): obtaining (210) localization data (23) pertaining to the work cycle (22); based on the localization data (23), controlling (220) a first material handling machine (10-1) to travel a first iteration of the work cycle (22); while travelling along said work cycle (22): partitioning (230) the work cycle (22) into a plurality of cycle segments (24) via which the first material handling machine (10-1) travels, obtaining (232) road surface parameters (32) for each cycle segment (24), and obtaining (234) motion estimation data (34) of the first material handling machine (10-1) while located at each cycle segment (24); and generating (240) a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34).

Example 21: The computer-implemented method (200) of example 20, being carried out onboard the first material handling machine (10-1).

Example 22: The computer-implemented method (200) of example 20, being carried out remote from the first material handling machine (10-1).

Example 23: A computer program product comprising program code for performing, when executed by the processing circuitry (102; 602), the method (200) of any of examples 20-22.

Example 24: A non-transitory computer-readable storage medium comprising instructions, which when executed by the processing circuitry (102; 602), cause the processing circuitry (102; 602) to perform the method (200) of any of examples 20-22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 600) for digital twin management of a work cycle (22) at a work site (20), the computer system (100; 600) comprising processing circuitry (102; 602) configured to:
obtain localization data (23) pertaining to the work cycle (22);
based on the localization data (23), control a first material handling machine (10-1) to travel a first iteration of the work cycle (22);
while travelling along said work cycle (22):
- partition the work cycle (22) into a plurality of cycle segments (24) via which the first material handling machine (10-1) travels,
- obtain road surface parameters (32) for each cycle segment (24), and
- obtain motion estimation data (34) of the first material handling machine (10-1) while located at each cycle segment (24); and
generate a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34).

2. The computer system (100; 600) of claim 1, wherein the processing circuitry (102; 602) is further configured to:
based on the localization data (23), control one or more additional material handling machines (10-n) to travel one or more additional iterations of the work cycle (22);
while travelling along said work cycle (22):
- obtain road surface parameters (32) for each cycle segment (24), and
- obtain motion estimation data (34) of said one or more additional material handling machines (10-n) for each cycle segment (24); and
update the virtual cycle segments (31) of the digital twin (30) based on the obtained road surface parameters (32) and the obtained motion estimation data (34).

3. The computer system (100; 600) of claim 2, wherein the processing circuitry (102; 602) is further configured to:
determine a target driving criteria (40) for one or more of the virtual cycle segments (31); and
transmit control signals (42) for control of one or more additional material handling machines (10-n) in one or more additional iterations of the work cycle (22) based on the target driving criteria (40).

4. The computer system (100; 600) of claim 3, wherein the target driving criteria comprises one or more of a productivity criteria, a fuel consumption criteria, a carbon footprint criteria, and an operational safety criteria.

5. The computer system (100; 600) of any of claims 3-4, wherein the processing circuitry (102; 602) is configured to determine the target driving criteria (40) by:
determining a first operational setting for an additional material handling machine (10-n) in a first iteration of the work cycle (22);
in response to the additional material handling machine (10-n) having travelled said first iteration, determining a slippage condition of at least one tire (5) of the additional material handling machine (10-n) at one or more cycle segments (24) of the work cycle (22); and
based on the slippage condition, determining a second operational setting for the additional material handling machine (10-n) in one or more additional iterations of the work cycle (22).

6. The computer system (100; 600) of claim 5, wherein the processing circuitry (102; 602) is configured to determine the slippage condition by:
controlling the additional material handling machine (10-n) to drive both its steering axles while allowing a first axle to freewheel; and
applying a negative torque to the first axle to identify a point at which slippage occurs.

7. The computer system (100; 600) of any of claims 5-6, wherein the operational setting comprises one or more of:
a speed setting for one or more cycle segments (24);
an acceleration setting for one or more cycle segments (24);
a travelling maneuver setting comprising one or more of an indicator to travel to location outside the work cycle (22), and an indicator to reverse a travelling direction in the work cycle (22);
a friction value setting for the additional material handling machine (10-n), the friction value setting comprising one or more of a suspension setting adjustment, and a torque distribution adjustment; and
a work cycle adjustment setting, the work cycle adjustment setting comprising one or more of an omission of a cycle segment (24) from the work cycle (22), an inclusion of a cycle segment (24) to the work cycle (22), and an adjustment of an existing cycle segment (24) of the work cycle (22).

8. The computer system (100; 600) of any of claims 5-7, wherein the processing circuitry (102; 602) is further configured to obtain topography data of the work cycle (22), and wherein the operational setting is adapted based on said topography data.

9. A material handling machine (10) comprising the computer system (100; 600) of any of claims 1-8.

10. The material handling machine (10) of claim 9, further comprising a set of sensors (12) being configured to obtain the road surface parameters (32), the set of sensors (12) comprising:
a tire monitoring system module (13) for each tire (5) of the material handling machine (10);
a radar speed sensor (14); and
a 6-axis inertial measurement unit (15).

11. The material handling machine (10) of claim 9 or 10, further comprising a machine motion estimation system (16) being configured to obtain motion estimation data (34).

12. A fleet (1) comprising a plurality of material handling machines (10) according to any of claims 9-11.

13. A computer-implemented method (200) for digital twin management of a work cycle (22) at a work site (20), the method (200) comprising, by processing circuitry (102; 602) of a computer system (100; 600):
obtaining (210) localization data (23) pertaining to the work cycle (22);
based on the localization data (23), controlling (220) a first material handling machine (10-1) to travel a first iteration of the work cycle (22);
while travelling along said work cycle (22):
- partitioning (230) the work cycle (22) into a plurality of cycle segments (24) via which the first material handling machine (10-1) travels,
- obtaining (232) road surface parameters (32) for each cycle segment (24), and
- obtaining (234) motion estimation data (34) of the first material handling machine (10-1) while located at each cycle segment (24); and
generating (240) a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34).

14. A computer program product comprising program code for performing, when executed by the processing circuitry (102; 602), the method (200) of claim 13.

15. A non-transitory computer-readable storage medium comprising instructions, which when executed by the processing circuitry (102; 602), cause the processing circuitry (102; 602) to perform the method (200) of claim 13.

## Amended claims

### Amended claims in accordance with Rule 137(2) EPC.

1. A fleet (1) comprising a plurality of material handling machines (10) and a computer system (100; 600) for digital twin management of a work cycle (22) at a work site (20),
wherein each material handling machine (10) comprises a set of sensors (12) being configured to obtain road surface parameters (32), the set of sensors (12) comprising a tire monitoring system module (13) for each tire (5) of the material handling machine (10), a radar speed sensor (14), and a 6-axis inertial measurement unit (15),
wherein the computer system (100; 600) comprises processing circuitry (102; 602) configured to:
obtain localization data (23) pertaining to the work cycle (22);
based on the localization data (23), control a first material handling machine (10-1) in the fleet (1) to travel a first iteration of the work cycle (22);
while travelling along said work cycle (22):
- partition the work cycle (22) into a plurality of cycle segments (24) via which the first material handling machine (10-1) travels,
- obtain road surface parameters (32) for each cycle segment (24), and
- obtain motion estimation data (34) of the first material handling machine (10-1) while located at each cycle segment (24);
generate a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34);
based on the localization data (23), control one or more additional material handling machines (10-n) in the fleet (1) to travel one or more additional iterations of the work cycle (22);
while travelling along said work cycle (22):
- obtain road surface parameters (32) for each cycle segment (24), and
- obtain motion estimation data (34) of said one or more additional material handling machines (10-n) for each cycle segment (24);
update the virtual cycle segments (31) of the digital twin (30) based on the obtained road surface parameters (32) and the obtained motion estimation data (34),
determine a target driving criteria (40) for one or more of the virtual cycle segments (31), the target driving criteria (40) comprising one or more of a productivity criteria, a fuel consumption criteria, a carbon footprint criteria, and an operational safety criteria; and
transmit control signals (42) for control of one or more additional material handling machines (10-n) in one or more additional iterations of the work cycle (22) based on the target driving criteria.

2. The fleet (1) of claim 1, wherein the processing circuitry (102; 602) is configured to determine the target driving criteria (40) by:
determining a first operational setting for an additional material handling machine (10-n) in a first iteration of the work cycle (22);
in response to the additional material handling machine (10-n) having travelled said first iteration, determining a slippage condition of at least one tire (5) of the additional material handling machine (10-n) at one or more cycle segments (24) of the work cycle (22); and
based on the slippage condition, determining a second operational setting for the additional material handling machine (10-n) in one or more additional iterations of the work cycle (22).

3. The fleet (1) of claim 2, wherein the processing circuitry (102; 602) is configured to determine the slippage condition by:
controlling the additional material handling machine (10-n) to drive both its steering axles while allowing a first axle to freewheel; and
applying a negative torque to the first axle to identify a point at which slippage occurs.

4. The fleet (1) of any of claims 2-3, wherein the operational setting comprises one or more of:
a speed setting for one or more cycle segments (24);
an acceleration setting for one or more cycle segments (24);
a travelling maneuver setting comprising one or more of an indicator to travel to location outside the work cycle (22), and an indicator to reverse a travelling direction in the work cycle (22);
a friction value setting for the additional material handling machine (10-n), the friction value setting comprising one or more of a suspension setting adjustment, and a torque distribution adjustment; and
a work cycle adjustment setting, the work cycle adjustment setting comprising one or more of an omission of a cycle segment (24) from the work cycle (22), an inclusion of a cycle segment (24) to the work cycle (22), and an adjustment of an existing cycle segment (24) of the work cycle (22).

5. The fleet (1) of any of claims 2-4, wherein the processing circuitry (102; 602) is further configured to obtain topography data of the work cycle (22), and wherein the operational setting is adapted based on said topography data.

6. The fleet (1) of any preceding claim, wherein each material handling machine (10) further comprises a machine motion estimation system (16) being configured to obtain motion estimation data (34).

7. A computer-implemented method (200) for digital twin management of a work cycle (22) at a work site (20), the method (200) comprising, by processing circuitry (102; 602) of a computer system (100; 600):
obtaining (210) localization data (23) pertaining to the work cycle (22);
based on the localization data (23), controlling (220) a first material handling machine (10-1) in a fleet (1) comprising a plurality of material handling machines (10) to travel a first iteration of the work cycle (22), wherein each material handling machine (10) comprises a set of sensors (12) being configured to obtain road surface parameters (32), the set of sensors (12) comprising a tire monitoring system module (13) for each tire (5) of the material handling machine (10), a radar speed sensor (14), and a 6-axis inertial measurement unit (15);
while travelling along said work cycle (22):
- partitioning (230) the work cycle (22) into a plurality of cycle segments (24) via which the first material handling machine (10-1) travels,
- obtaining (232) road surface parameters (32) for each cycle segment (24), and
- obtaining (234) motion estimation data (34) of the first material handling machine (10-1) while located at each cycle segment (24);
generating (240) a digital twin (30) of the work cycle (22), the digital twin (30) comprising a plurality of virtual cycle segments (31) corresponding to the cycle segments (24), wherein each virtual cycle segment (31) is associated with a respective set of the obtained road surface parameters (32) and the obtained motion estimation data (34);
based on the localization data (23), controlling one or more additional material handling machines (10-n) in the fleet (1) to travel one or more additional iterations of the work cycle (22);
while travelling along said work cycle (22):
- obtaining road surface parameters (32) for each cycle segment (24), and
- obtaining motion estimation data (34) of said one or more additional material handling machines (10-n) for each cycle segment (24);
updating the virtual cycle segments (31) of the digital twin (30) based on the obtained road surface parameters (32) and the obtained motion estimation data (34),
determining a target driving criteria (40) for one or more of the virtual cycle segments (31), the target driving criteria (40) comprising one or more of a productivity criteria, a fuel consumption criteria, a carbon footprint criteria, and an operational safety criteria; and
transmitting control signals (42) for control of one or more additional material handling machines (10-n) in one or more additional iterations of the work cycle (22) based on the target driving criteria.

8. A computer program product comprising program code for performing, when executed by the processing circuitry (102; 602), the method (200) of claim 7.

9. A non-transitory computer-readable storage medium comprising instructions, which when executed by the processing circuitry (102; 602), cause the processing circuitry (102; 602) to perform the method (200) of claim 7.
